Europäisches Patentamt

(19) European Patent Office

Office européen des brevets

(11) EP 0 780 751 A2

## (12) EUROPEAN PATENT APPLICATION

(43) Date of publication:
25.06.1997 Bulletin 1997/26

(51) Int. Cl.$^6$: G05F 1/70

(21) Application number: 96114376.5

(22) Date of filing: 09.09.1996

(84) Designated Contracting States:
DE FR IT NL

(30) Priority: 22.12.1995 GB 9526314

(71) Applicant: MOTOROLA SEMICONDUCTEURS S.A.
F-31023 Toulouse Cédex (FR)

(72) Inventors:
• L'Hermite, François
31530 Lasserre par Levignac (FR)

• Turchi, Joel
31300 Toulouse (FR)
• Bruniquel, Jean Paul
31470 Saint Lys (FR)

(74) Representative: Hudson, Peter David et al
Motorola,
European Intellectual Property Operations,
Midpoint
Alencon Link
Basingstoke, Hampshire RG21 7PL (GB)

(54) **Power factor controller circuit**

(57) A power factor controller circuit (10) includes a switched inductor arrangement (30) coupled to a rectified voltage input (20), for providing an output voltage (40). A control circuit (35) switches the switched inductor arrangement (30) according to a control input. A feedback path (50) is arranged to compare a portion of the output voltage with a sensed parameter of the input voltage and to add a weighted fixed voltage (65), in order to provide an error voltage to the control input.

FIG.1

## Description

Field of the Invention

This invention relates to power factor controller circuits.

Background of the Invention

Power factor controller (PFC) circuits are typically used within power supply applications, and may comprise a voltage rectifier circuit and a bulk capacitor. PFC circuits are incorporated to reduce the problems associated with current drain. However, with such PFC circuits, current is only drawn while the bulk capacitor is being charged, resulting in an inefficient current profile, including high current peaks which produce much adverse noise.

Furthermore, since the size and capacity of mains supply lines and the rectifier components are dependent upon the peak current drain, the above high current peaks are even more undesirable, since their magnitudes dictate the peak current drain. Industry standards, such as the forthcoming IEC555/2 standard, impose a maximum value for each harmonic order of amplitude of the input current.

A known solution to mitigate the problem of the inefficient current profile is to employ a pre-regulator stage in which the bulk capacitor is replaced by a large capacitor/inductor circuit, and a power switch and diode arrangement. Such an arrangement is known as a boost configuration, since the output voltage level always exceeds the instantaneous input voltage level. However this approach is very expensive, due to the size and number of components used.

This invention seeks to provide a power factor controller circuit which mitigates the above mentioned disadvantages.

Summary of the Invention

According to the present invention there is provided a power factor controller circuit, comprising: a rectified voltage input; a switched inductor arrangement coupled to the rectified voltage input, for providing an output voltage; control means for switching the switched inductor arrangement according to a control input; and, feedback means, arranged for comparing a portion of the output voltage with a weighted parameter of the input voltage, and for providing an error voltage to the control input for regulating the switched inductor, wherein the feedback means includes sensing means for sensing the parameter of the input voltage and weighting means for weighting the parameter of the input voltage by a predetermined fixed voltage.

Preferably the parameter of the input voltage is an average value thereof. Alternatively the parameter of the input voltage is a peak value thereof.

Preferably the weighting means includes an adder circuit, arranged to add the predetermined fixed voltage to the parameter of the input voltage, thereby providing the weighted parameter of the input voltage.

Alternatively the weighting means includes a subtraction circuit, arranged to subtract the predetermined fixed voltage from the parameter of the input voltage, thereby providing the weighted parameter of the input voltage.

Preferably the switched inductor arrangement comprises an inductor arranged in dependence upon the predetermined fixed voltage. The feedback means preferably includes an error amplifier having an inverting input coupled to the output voltage, a non-inverting input coupled to the weighting means and an output for providing the error voltage.

Preferably the predetermined fixed voltage is positive. Alternatively, the the predetermined fixed voltage is negative.

Brief Description of the Drawing

An exemplary embodiment of the invention will now be described with reference to the single figure drawing which shows a power factor controller circuit in accordance with the invention.

Detailed Description of a Preferred Embodiment

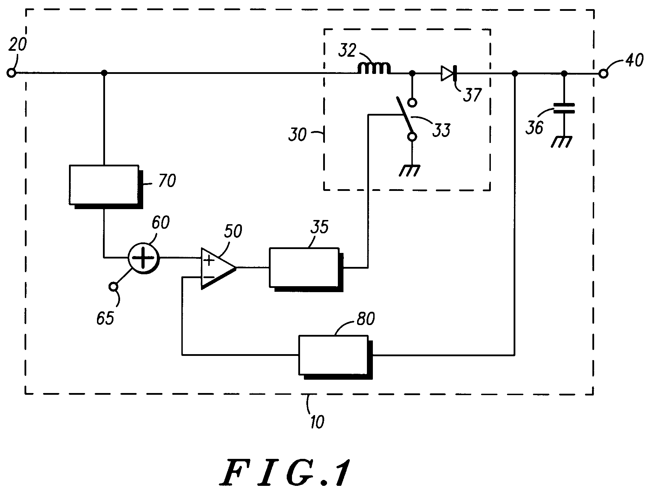

Referring to FIG.1, there is shown a power factor controller circuit 10, including a rectified voltage input terminal 20, a switched inductor arrangement 30 coupled to the rectified voltage input terminal 20, an output terminal 40, coupled to the switched inductor arrangement 30 and a feedback path. A capacitor 36 is coupled between the output terminal 40 and ground.

The switched inductor arrangement comprises an inductor 32, a switch 33 and a diode 37. A first terminal of the inductor 32 is coupled to the rectified voltage input terminal 20. The diode 37 is coupled between a second terminal of the inductor 32 and the output terminal 40. The switch 33 has a first switched input coupled to a ground reference, a second switched input coupled to a node between the second terminal of the inductor 32 and the diode 37, and a control input to be further described below. In this way the switch 33 is arranged for selectively coupling the node to ground.

The feedback path comprises a scaling circuit 80, an error amplifier 50, a control circuit 35, a sensing circuit 70 and an adder circuit 60.

The sensing circuit 70 is coupled to sense the input voltage from the rectified voltage input terminal 20. The adder circuit 60 is arranged to receive a sensed voltage signal from the sensing circuit 70 and a reference voltage 65, in order to provide a summed output thereof. The scaling circuit 80 is coupled to the output terminal 40, for providing a scaled value of the output voltage.

The error amplifier circuit 50 has an inverting input coupled to receive the scaled output voltage from the scaling circuit 80, a non-inverting input coupled to receive the summed output and an output coupled to the control input of the switch 33 via the control circuit 35.

In operation, a rectified voltage is received at the rectified voltage input 20. The sensing circuit 70 is arranged to detect the average value of the rectified voltage and to provide a scaled voltage representing this average value to the adder circuit 60. A predetermined voltage $\partial V$ 65 is added to the average value voltage within the adder circuit 60, producing a summed voltage which is provided to the non-inverting terminal of the error amplifier 50. The summed voltage is therefore equal to sum of the average value voltage and $\partial V$ 65.

The rectified voltage also induces a current in inductor 32 and when the switch 33 is open, current flows through the inductor 32 and the diode 37 to the output terminal 40. When the switch 33 is closed, current flows through the inductor 32 and switch 33 to ground. The diode 37 is then reverse biased, and no current flows therein.

The voltage at the output terminal 40 is sensed by the scaling circuit 80, which provides the scaled value to the inverting terminal of the error amplifier 50. The error amplifier 50 produces an error signal derived from the inverting and non-inverting inputs.

The control circuit 35 is arranged to provide control signals to the switch 33 in response to the value of the error signal. In this way regulation of the circuit 10 is achieved. The value of the inductor 32 can be readily chosen in conjunction with the value of $\partial V$ 65, and the relative scaling factors used by the sensing circuit 70 and the scaling circuit 80, as shown by the following equations:-

In a discontinuous working mode of operation, inductance L is related to the time parameters ton and toff as follows:

$$t_{on} = \frac{L.Ipk}{Vin(t)} \qquad eq.1$$

$$t_{off} = \frac{L.Ipk}{Vo-Vin(t)} \qquad eq.2$$

where    Vin(t) is mains voltage as a function of the time (50 or 60Hz)
Vo is the output voltage
ton is the ON time duration of the power switch
toff is the OFF time duration of the power switch
Ipk is the peak value of the current at the end of the ON time

The switching period T is:

$$T=ton+toff \qquad eq.3$$

Therefore combining equations 1, 2 and 3:

$$T = t_{on}\left(\frac{Vo}{Vo-Vin(t)}\right) \qquad eq.4$$

Using equations 1 and 4, this leads to:

$$L = \frac{Vin(t).T}{Ipk} \cdot \frac{V0-Vin(t)}{Vo} \qquad eq.5$$

Vo is related to the average input voltage as follows:

$$Vo = \frac{Kin}{Ko} \cdot Vin_{av} + \frac{\partial V}{Ko} \qquad eq.6$$

where    Kin is the scaling factor of the input voltage.
Ko is the scaling factor of the output voltage.
$\partial V$ is the predetermined fixed voltage.
$Vin_{av}$ is the average input voltage.

So, using equations 5 and 6, L can be expressed as follows:-

$$L = \frac{Vin(t).T}{Ipk} \cdot \left(1 - \frac{Vin(t)}{\frac{Kin}{Ko} \cdot Vin_{av} + \frac{\partial V}{Ko}}\right) \qquad eq.7$$

Equation 7 demonstrates that for a given period T, and a given current Ipk, the value L of the inductor 32 may be reduced when

$$\left(\frac{Kin}{Ko} \cdot Vin_{av} + \frac{\partial V}{Ko}\right)$$

tends towards Vin(t), taking into account that Vo must always be higher than Vin(t).

Appropriate values are chosen for the sensing circuit 70 (Kin), the scaling circuit 80 (Ko) and $\partial V$, to produce an optimal output voltage very near Vin(t), while always remaining greater than the instantaneous value of the input voltage at the input terminal 20. In this way, the size of inductor 32 can be kept to a minimum. In other working modes, such as a continuous working mode, similar conditions apply, and produce a similar reduction in the size of the inductor 32.

It will be appreciated by a person skilled in the art that alternate embodiments to the one described above are possible. For example, the adder circuit 60 could be replaced with alternative means to introduce the fixed voltage $\partial V$ 65.

Furthermore, the fixed voltage $\partial V$ 65 could be either positive or negative. The adder circuit 60 may be replaced by a subtraction circuit arranged to subtract $\partial V$ 65.

The error amplifier 50 could be replaced by an alternative arrangement such as a microprocessor. The sensing circuit 70 could be arranged to sense a parameter of the input voltage other than the average value, such as a peak value.

**Claims**

1. A power factor controller circuit, comprising:

   a rectified voltage input;
   a switched inductor arrangement coupled to the rectified voltage input, for providing an output voltage;
   control means for switching the switched inductor arrangement according to a control input; and,
   feedback means, arranged for comparing a portion of the output voltage with a weighted parameter of the input voltage, and for providing an error voltage to the control input for regulating the switched inductor, wherein the feedback means includes sensing means for sensing the parameter of the input voltage and weighting means for weighting the parameter of the input voltage by a predetermined fixed voltage.

2. The power factor controller circuit of claim 1 wherein the parameter of the input voltage is an average value thereof.

3. The power factor controller circuit of claim 1 wherein the parameter of the input voltage is a peak value thereof.

4. The power factor controller circuit of any preceding claim wherein the weighting means includes an adder circuit, arranged to add the predetermined fixed voltage to the parameter of the input voltage, thereby providing the weighted parameter of the input voltage.

5. The power factor controller circuit of any one of the claims 1 to 3 wherein the weighting means includes a subtractor circuit, arranged to subtract the predetermined fixed voltage from the parameter of the input voltage, thereby providing the weighted parameter of the input voltage.

6. The power factor controller circuit of any preceding claim wherein the switched inductor arrangement comprises an inductor arranged in dependence upon the predetermined fixed voltage.

7. The power factor controller circuit of any preceding claim wherein the feedback means includes an error amplifier having an inverting input coupled to the output voltage, a non-inverting input coupled to the weighting means and an output for providing the error voltage.

8. The power factor controller circuit of any preceding claim wherein the predetermined fixed voltage is positive.

9. The power factor controller circuit of any one of the claims 1 to 7 wherein the predetermined fixed voltage is negative.

**FIG.1**